(19) Europäisches Patentamt
European Patent Office
Office européen des brevets

(11) Veröffentlichungsnummer: **0 237 866**
**A1**

(12) **EUROPÄISCHE PATENTANMELDUNG**

(21) Anmeldenummer: **87103027.6**

(22) Anmeldetag: **04.03.87**

(51) Int. Cl.³: **A 01 N 57/16**
C 07 F 9/58

(30) Priorität: **15.03.86 DE 3608743**

(43) Veröffentlichungstag der Anmeldung:
**23.09.87 Patentblatt 87/39**

(84) Benannte Vertragsstaaten:
**AT BE CH DE FR GB IT LI NL**

(71) Anmelder: **BAYER AG**
**Konzernverwaltung RP Patentabteilung**
**D-5090 Leverkusen 1 Bayerwerk(DE)**

(72) Erfinder: **Maurer, Fritz, Dr.**
**Roeberstrasse 8**
**D-5600 Wuppertal 1(DE)**

(72) Erfinder: **Sommer, Herbert, Dr.**
**Platz 59**
**D-5630 Remscheid(DE)**

(72) Erfinder: **Köller, Wolfram, Dr. Cornell-University**
**New York State Agricultural Experiment Station**
**P.O. Box 462 Geneva, N.Y. 14456(US)**

(72) Erfinder: **Brandes, Wilhelm, Dr.**
**Eichendorffstrasse 3**
**D-5653 Leichlingen(DE)**

(72) Erfinder: **Reinecke, Paul, Dr.**
**Steinstrasse 8**
**D-5090 Leverkusen 3(DE)**

(54) **Selektiv fungizide Verwendung von asymmetrischen 2-Pyridyl-phosphorsäureestern.**

(57) Die Erfindung betrifft die Verwendung von asymmetrischen 2-Pyridyl-phosphorsäureestern der allgemeinen Formel (I)

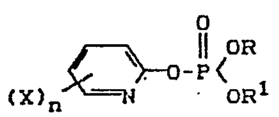

(I)

in welcher

X für Halogen steht,

R für $C_1$-$C_3$-Alkyl steht,

$R^1$ für Alkyl mit mindestens 3 Kohlenstoffatomen steht und

n für die Zahlen 0, 1, 2, 3 oder 4 steht, wobei R verschieden von $R^1$ ist,

als selektive Fungizide und Cutinase-Inhibitoren.

EP 0 237 866 A1

0237866

BAYER AKTIENGESELLSCHAFT
Konzernverwaltung RP
Patentabteilung

5090 Leverkusen, Bayerwerk
14. MRZ. 1986
Bas/Ke-c
IIb

Selektiv fungizide Verwendung von asymmetrischen 2-Pyridyl-phosphorsäureestern

Die vorliegende Erfindung betrifft die Verwendung von asymmetrischen 2-Pyridyl-phosphorsäureestern als verbesserte selektive Fungizide z.B. gegen Venturia- und Erysiphe-Erreger und ihre Cutinase-Inhibitoren Wirkung.

Es ist bereits bekannt, daß O-Pyridyl(thiono)phosphorsäureester eine fungizide Wirksamkeit gegenüber Rhizoctonia solani aufweisen (verg. z. B. US-PS 3 244 586). Ferner ist die protektive Wirkung symmetrischer Phosphorsäureester gegen Fusarium solani (W. Köller, C.R. Allan, P.E. Kolattukudy (1982) Phytopathology 72, 1425), Colletotrichum gloeosporioides (M.B. Dickmann, S.S. Patil, P.E. Kolattukudy (1983), Phytopathology 73, 1209), Venturia inaequalis und Colletotrichum graminicola (P.E. Kolattukudy (1984) in: W.M. Dugger, S. Bartnicki-Garcia (eds.), Structure, Function, and Biosynthesis of Plant Cell Walls, pp. 302-343, American Society of Plant Physiologists, Rockville) bekannt, die auf einer Hemmung von Cutinase beruht. Über die hoch interessante Wirksamkeit gegenüber echten Mehltaupilzen wie z.B. Erysiphe-Arten ist jedoch nichts bekannt.

0237866

Es wurde nun die Verwendung von asymmetrischen 2-Pyridylphosphorsäureestern der Formel (I)

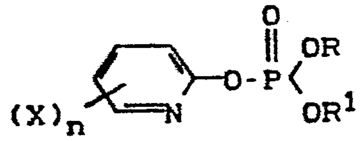

(I)

in welcher

X für Halogen steht,

R für $C_1$-$C_3$-Alkyl steht,

$R^1$ für Alkyl mit mindestens 3 Kohlenstoffatomen steht und

n für die Zahlen 0, 1, 2, 3 oder 4 steht, wobei R verschieden von $R^1$ ist,

als selektive Fungizide gefunden.

Überraschenderweise zeigen die asymmetrischen 2-Pyridylphosphorsäureester der Formel (I) eine erheblich höhere selektive fungizide Wirkung und eine gesteigerte Wirkung als Cutinase-Inhibitoren als die aus dem Stand der Technik bekannten vergleichbaren O-Pyridyl(thiono)phosphorsäureester wie beispielsweise O,O-Diethyl-O-(3,5,6-trichlor-2-pyridyl)-phosphorsäureester (vergl. z. B. US-PS 3 244 586).

Die erfindungsgemäß verwendbaren Verbindungen sind durch die Formel (I) definiert. In dieser Formel stehen vorzugsweise

X für Fluor, Chlor oder Brom,

R für Methyl, Ethyl, n-Propyl oder i-Propyl,

$R^1$ für Alkyl mit 3 bis 12 Kohlenstoffatomen und

n für die Zahlen 0, 1, 2, 3 oder 4, wobei R verschieden von $R^1$ ist.

Besonders bevorzugt sind die Verbindungen der Formel (I), in welcher

X für Fluor, Chlor oder Brom steht,

R für Methyl, Ethyl, n-Propyl oder i-Propyl steht,

$R^1$ für Alkyl mit 3 bis 10 Kohlenstoffatomen steht und

n für die Zahlen 1, 2 oder 3 steht, wobei R verschieden von $R^1$ ist.

Ganz besonders bevorzugt sind die Verbindungen der Formel (I), in welcher

X für Chlor steht,

R für Methyl oder Ethyl steht,

$R^1$ für n-Propyl, i-Propyl, n-Butyl, i-Butyl, sec.-Butyl, tert.-Butyl, n-Pentyl, 2-Pentyl, 3-Pentyl, 2-Methyl-1-butyl, 2-Methyl-2-butyl, 3-Methyl-2-butyl, 2,2-Dimethyl-1-butyl, n-Hexyl, n-Heptyl und n-Octyl steht und

n für die Zahlen 2 oder 3 steht.

Die erfindungsgemäß zu verwendenden Verbindungen der Formel (I) sind bekannt und/oder lassen sich nach bekannten Methoden herstellen (vergl. z. B. US-PS 3 244 586). So lassen sich 2-Hydroxypyridine mit Phosphorsäurehalogeniden in Gegenwart von inerten Verdünnungsmitteln wie z. B. Toluol, Dimethylsulfoxid, Acetonitril, Chloroform oder Dimethylformamid und in Gegenwart von Säureakzeptoren wie z. B. Natriumcarbonat, Kaliumcarbonat, Natriumhydroxid oder Triethylamin bei Temperaturen zwischen 20 °C und 100 °C gemäß dem folgenden Formelschema umsetzen:

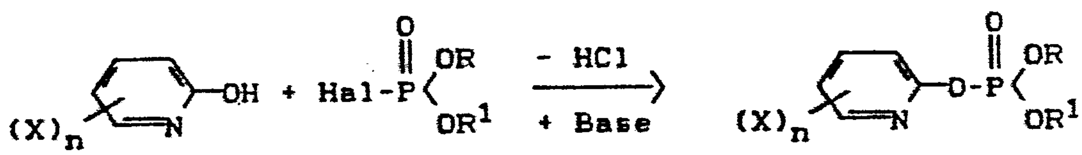


Die erfindungsgemäß zu verwendenden Wirkstoffe weisen eine starke selektive fungizide Wirkung auf und eine gesteigerte Wirkung als Cutinase-Inhibitoren.

Eine besonders gute Wirksamkeit besitzen die erfindungsgemäß einzusetzenden Wirkstoffe gegen Erisyphe- und Venturia-Arten wie z. B. gegen Erysiphe graminis den Erreger des Getreidemehltaus und Venturia inaequalis den Erreger des Apfelschorfs.

Die Wirkstoffe können in die üblichen Formulierungen übergeführt werden, wie Lösungen, Emulsionen, Suspensionen, Pulver, Schäume, Pasten, Granulate, Aerosole, Wirkstoff-imprägnierte Natur- und synthetische Stoffe, Feinstverkapselungen in polymeren Stoffen und in Hüllmassen für Saatgut, ferner in Formulierungen mit Brennsätzen, wie Räucherpatronen, -dosen, -spiralen u.ä., sowie ULV-Kalt- und Warmnebel-Formulierungen.

Diese Formulierungen werden in bekannter Weise hergestellt, z.B. durch Vermischen der Wirkstoffe mit Streckmitteln, also flüssigen Lösungsmitteln, unter Druck stehenden verflüssigten Gasen und/oder festen Trägerstoffen, gegebenenfalls unter Verwendung von oberflächenaktiven Mitteln, also Emulgiermitteln und/oder Dispergiermitteln und/oder schaumerzeugenden Mitteln. Im Falle der Benutzung von Wasser als Streckmittel können z.B. auch organische Lösungsmittel als Hilfslösungsmittel verwendet werden. Als flüssige Lösungsmittel kommen im wesentlichen in Frage: Aromaten, wie Xylol, Toluol, oder Alkylnaphthaline, chlorierte Aromaten oder chlorierte aliphatische Kohlenwasserstoffe, wie Chlorbenzole, Chlorethylene oder Methylenchlorid, aliphatische Kohlenwasserstoffe, wie Cyclohexan oder Paraffine, z.B. Erdölfraktionen, Alkohole, wie Butanol oder Glycol sowie deren Ether und Ester, Ketone, wie Aceton, Methylethylketon, Methylisobutylketon oder Cyclohexanon, stark polare Lösungsmittel, wie Dimethylformamid und Dimethylsulfoxid, sowie Wasser; mit verflüssigten gasförmigen Streckmitteln oder Trägerstoffen sind solche Flüssigkeiten gemeint, welche bei normaler Temperatur und unter Normaldruck gasförmig sind, z.B. Aerosol-Treibgase, wie Halogenkohlenwasserstoffe sowie Butan, Propan, Stickstoff und Kohlendioxid; als feste Trägerstoffe kommen in Frage: z.B. natürliche Gesteinsmehle, wie Kaoline, Tonerden, Talkum, Kreide, Quarz, Attapulgit, Montmorillonit oder Diatomeenerde und synthetische Gesteinsmehle, wie hochdisperse Kieselsäure, Aluminiumoxid und Silikate; als feste Trägerstoffe für Granulate kommen in Frage: z.B. gebrochene und fraktionierte natürliche Gesteine wie Calcit, Marmor, Bims, Sepiolith, Dolomit sowie synthetische Granulate aus anorganischen und organischen Mehlen sowie Granulate aus organischem Material wie Sägemehl, Kokosnußschalen, Maiskolben und Tabakstengel; als Emulgier und/oder schaumerzeugende Mittel kommen in Frage: z.B. nichtionogene und anionische Emulgatoren, wie Polyoxyethylen-Fettsäure-Ester, Polyoxyethylen-Fettalkohol-Ether, z.B. Alkylarylpolyglykol-Ether, Alkylsulfonate, Alkylsulfate, Arylsulfonate sowie Eiweißhydrolysate; als Dispergiermittel kommen in Frage: z.B. Lignin-Sulfitablaugen und Methylcellulose.

Es können in den Formulierungen Haftmittel wie Carboxymethylcellulose, natürliche und synthetische pulverige, körnige oder latexförmige Polymere verwendet werden, wie Gummiarabicum, Polyvinylalkohol, Polyvinylacetat, sowie natürliche Phospholipide, wie Kephaline und Lecithine, und synthetische Phospholipide. Weitere Additive können mineralische und vegetabile Öle sein.

Es können Farbstoffe wie anorganische Pigmente, z.B. Eisenoxid, Titanoxid, Ferrocyanblau und organische Farbstoffe, wie Alizarin-, Azo- und Metallphthalocyaninfarbstoffe und Spurennährstoffe wie Salze von Eisen, Mangan, Bor, Kupfer, Kobalt, Molybdän und Zink verwendet werden.

Die Formulierungen enthalten im allgemeinen zwischen 0,1 und 95 Gewichtsprozent Wirkstoff, vorzugsweise zwischen 0,5 und 90 %.

Die erfindungsgemäß zu verwendenden Wirkstoffe können in den Formulierungen in Mischung mit anderen bekannten Wirkstoffen vorliegen, wie Fungizide, Insektizide, Akarizide und Herbizide, sowie in Mischungen mit Düngemitteln und Wachstumsregulatoren.

Die Wirkstoffe können als solche, in Form ihrer Formulierungen oder den daraus bereiteten Anwendungsformen, wie gebrauchsfertige Lösungen, emulgierbare Konzentrate, Emulsionen, Schäume, Suspensionen, Spritzpulver, Pasten, lösliche Pulver, Stäubemittel und Granulate, angewendet werden. Die Anwendung geschieht in üblicher Weise, z.B. durch Gießen, Verspritzen, Versprühen, Verstreuen, Verstäuben, Verschäumen, Bestreichen usw.

Bei der Behandlung von Pflanzenteilen können die Wirkstoffkonzentrationen in den Anwendungsformen in einem größeren Bereich variiert werden. Sie liegen im allgemeinen zwischen 1 und 0,0001 Gew.-%, vorzugsweise zwischen 0,5 und 0,001 %.

Herstellungsbeispiele

Beispiel 1

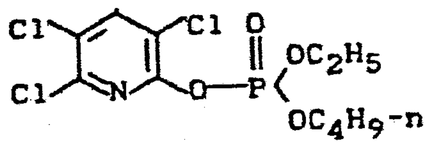

Eine Mischung aus 4 g (0,02 Mol) 2-Hydroxy-3,5,6-trichlorpyridin, 4,2 g (0,03 Mol) Kaliumcarbonat, 6 g (0,03 Mol) O-n-Butyl-O-ethyl-phosphorsäurediesterchlorid und 80 ml Acetonitril wird 3 Stunden bei 50 °C gerührt. Dann wird auf 20 °C abgekühlt, mit 200 ml Toluol versetzt und zweimal mit je 100 ml Wasser geschüttelt. Die organische Phase wird abgetrennt, über Natriumsulfat getrocknet und im Vakuum eingedampft.

Nach Andestillieren bei 80 °C im Hochvakuum erhält man 5,7 g (79 % der Theorie) O-n-Butyl-O-ethyl-O-(3,5,6-trichlor-2-pyridyl)-phosphorsäureester in Form eines hellbraunen Öles mit dem

Brechungsindex $n_D^{21}$ : 1,4884.

Analog Beispiel 1 können die folgenden Verbindungen der Formel (I)

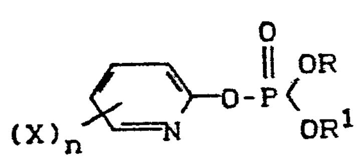 (I)

hergestellt werden:

Tabelle

| Beisp.-Nr. | R | $R^1$ | $(X)_n$ | Brechungs-index |
|---|---|---|---|---|
| 2 | $-C_2H_5$ | $n-C_6H_{13}$ | $3,5,6-Cl_3$ | $n_D^{21}$: 1,4888 |
| 3 | $-C_2H_5$ | $n-C_8H_{17}$ | $3,5,6-Cl_3$ | $n_D^{21}$: 1,4860 |
| 4 | $-CH_3$ | $n-C_4H_9$ | $3,5,6-Cl_3$ | $n_D^{22}$: 1,4917 |
| 5 | $-CH_3$ | $n-C_6H_{13}$ | $3,5,6-Cl_3$ | $n_D^{22}$: 1,4904 |
| 6 | $-CH_3$ | $n-C_8H_{17}$ | $3,5,6-Cl_3$ | $n_D^{22}$: 1,4890 |
| 7 | $-CH_3$ | $n-C_6H_{13}$ | 6-Cl | $n_D^{23}$: 1,4765 |
| 8 | $-CH_3$ | $n-C_4H_9$ | 6-Cl | $n_D^{23}$: 1,4800 |
| 9 | $-CH_3$ | $n-C_6H_{13}$ | $3,5-Cl_2$ | $n_D^{23}$: 1,4758 |
| 10 | $-CH_3$ | $n-C_4H_9$ | $3,5-Cl_2$ | $n_D^{23}$: 1,4861 |
| 11 | $-C_2H_5$ | $i-C_4H_9$ | $3,5,6-Cl_3$ | $n_D^{22}$: 1,4850 |
| 12 | $-CH_3$ | $n-C_3H_7$ | $3,5,6-Cl_3$ | $n_D^{22}$: 1,5059 |
| 13 | $-CH_3$ | $i-C_4H_9$ | $3,5,6-Cl_3$ | $n_D^{22}$: 1,4969 |
| 14 | $-C_2H_5$ | $n-C_6H_{13}$ | $3,5-Cl_2$ | |
| 15 | $-CH_3$ | $n-C_4H_9$ | 6-Br | |
| 16 | $-CH_3$ | $n-C_6H_{13}$ | 6-F | |
| 17 | $-C_2H_5$ | $n-C_4H_9$ | $3,4,5,6-Cl_4$ | |

Tabelle - Fortsetzung

| Beisp.-Nr. | R | $R^1$ | $(X)_n$ | Brechungs-index |
|---|---|---|---|---|
| 18 | $-CH_3$ | $n-C_4H_9$ | $3,4,5,6-Cl_4$ | |
| 19 | $-CH_3$ | $n-C_6H_{13}$ | - | |
| 20 | $-CH_3$ | $n-C_4H_9$ | - | |
| 21 | $-C_2H_5$ | $n-C_4H_9$ | - | |
| 22 | $-C_2H_5$ | $n-C_3H_7$ | $3,5,6-Cl_3$ | |
| 23 | $-C_2H_5$ | $n-C_4H_9$ | 6-Br | |
| 24 | $-C_2H_5$ | $n-C_4H_9$ | 6-Cl | |
| 25 | $-C_2H_5$ | $n-C_6H_{13}$ | 6-Cl | |
| 26 | $-C_2H_5$ | $n-C_4H_9$ | $3,5-Cl_2$ | |

0237866

Beispiel A

Venturia-Test (Apfel) / protektiv

Lösungsmittel: 4,7 Gewichtsteile Aceton
Emulgator: 0,3 Gewichtsteile Alkylarylpolyglykolether

Zur Herstellung einer zweckmäßigen Wirkstoffzubereitung vermischt man 1 Gewichtsteil Wirkstoff mit den angegebenen Mengen Lösungsmittel und Emulgator und verdünnt das Konzentrat mit Wasser auf die gewünschte Konzentration.

Zur Prüfung auf protektive Wirksamkeit bespritzt man junge Pflanzen mit der Wirkstoffzubereitung bis zur Tropfnässe. Nach Antrocknen des Spritzbelages werden die Pflanzen mit einer wäßrigen Konidiensuspension des Apfelschorferregers (Venturia inaequalis) inokuliert und verbleiben dann 1 Tag bei 20$^{0}$C und 100 % relativer Luftfeuchtigkeit in einer Inkubationskabine.

Die Pflanzen werden dann im Gewächshaus bei 20 $^{0}$C und einer relativen Luftfeuchtigkeit von ca. 70 % aufgestellt.

12 Tage nach der Inokulation erfolgt die Auswertung.

0237866

**Tabelle A**

Venturia-Test (Apfel)/protektiv

| Wirkstoff | Befall in % bei einer Wirkstoffkonzentration von 5 ppm |
|---|---|
| 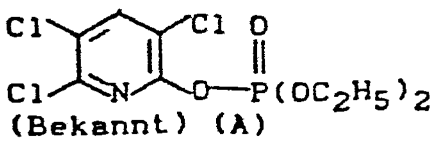 (Bekannt) (A) | 74 |
| 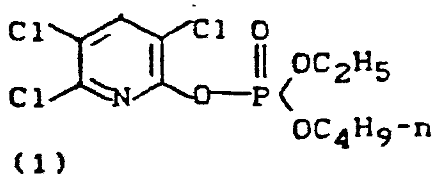 (1) | 27 |
| 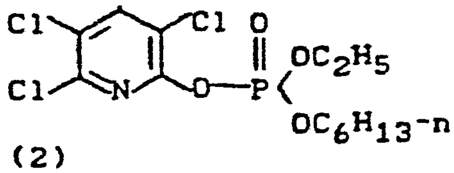 (2) | 11 |
| 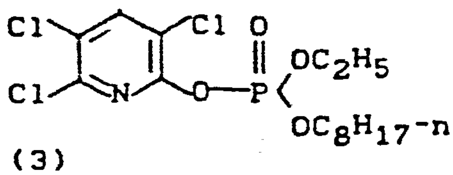 (3) | 19 |
| 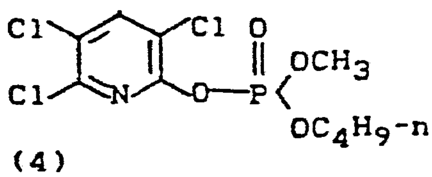 (4) | 5 |
| 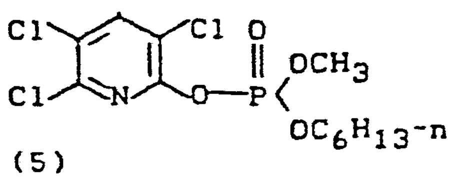 (5) | 3 |

Beispiel B

Erysiphe-Test (Gerste) / protektiv

Lösungsmittel: 100 Gewichtsteile Dimethylformamid
Emulgator: 0,25 Gewichtsteile Alkylarylpolyglykolether

Zur Herstellung einer zweckmäßigen Wirkstoffzubereitung vermischt man 1 Gewichtsteil Wirkstoff mit den angegebenen Mengen Lösungsmittel und Emulgator und verdünnt das Konzentrat mit Wasser auf die gewünschte Konzentration.

Zur Prüfung auf protektive Wirksamkeit besprüht man junge Pflanzen mit der Wirkstoffzubereitung taufeucht. Nach Antrocknen des Spritzbelages werden die Pflanzen mit Sporen von Erysiphe graminis f.sp.hordei bestäubt.

Die Pflanzen werden in einem Gewächshaus bei einer Temperatur von ca. 20°C und einer relativen Luftfeuchtigkeit von ca. 80 % aufgestellt, um die Entwicklung von Mehltaupusteln zu begünstigen.

7 Tage nach der Inokulation erfolgt die Auswertung.

## Tabelle B

Erysiphe-Test (Gerste) / protektiv

| Wirkstoff | Wirkstoffkonzentration in der Spritzbrühe in Gew.-% | Krankheitsbefall in % der unbehandelten Kontrolle |
|---|---|---|
| 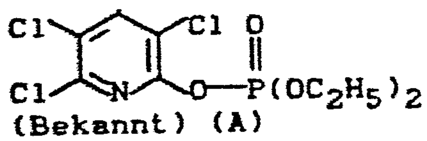 (Bekannt) (A) | 0,005 | 58,7 |
| 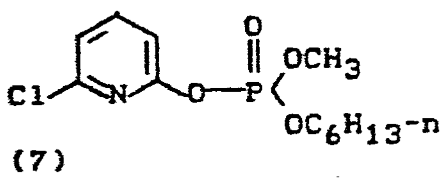 (7) | 0,0025 | 37,5 |
| 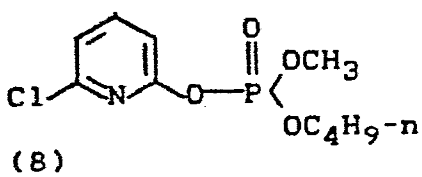 (8) | 0,0025 | 37,5 |
| 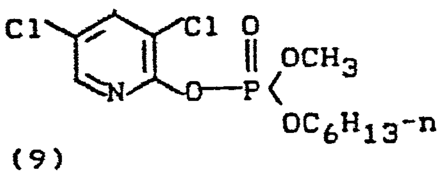 (9) | 0,0025 | 25,0 |
| 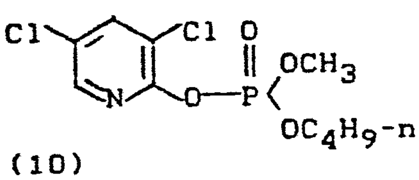 (10) | 0,0025 | 12,5 |

## Beispiel C

Cutinase-Inhibitor-Test

Das Enzym Cutinase wird aus Kulturfiltrat von Fusarium solani f.sp.pisi nach Standardmethoden gereinigt und photometrisch mit p-Nitrophenylbutyrat als Substrat getestet (P.E. Kolattukudy, K.E. Espelie, C.L. Soliday (1981), Meth. Enzymol. 71, 652).

Die Inhibitor-Wirkung wird einer beschriebenen Methode folgend bestimmt (W. Köller, C.R. Allan, P.E. Kolattukudy (1982), Phytopathology 72, 1425): Eine geeignete Menge Enzym wird zusammen mit dem Wirkstoff in gewünschter Konzentration in 1 ml Phosphatpuffer (0,1 M; pH 8) + 0,3 % (w/v) Triton X-100 bei 30° C inkubiert. Nach 30 Minuten Inkubation wird die enzymatische Restaktivität bestimmt. Anhand einer Dosis-Wirkungs-Beziehung wird der I(50)-Wert (= diejenige Wirkstoff-Konzentration, die zu einer Inhibierung von 50 % führt) ermittelt.

## Tabelle C

Cutinase-Inhibierung

| Wirkstoff | $I_{50}$ (µM) |
|---|---|
| 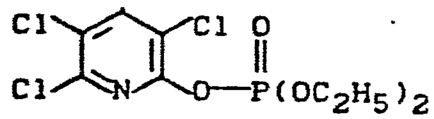 (Bekannt) (A) | 0,19 |
| 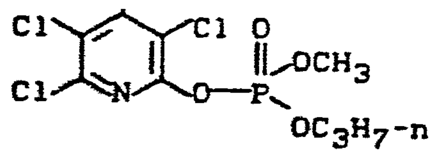 (12) | 0,039 |
| 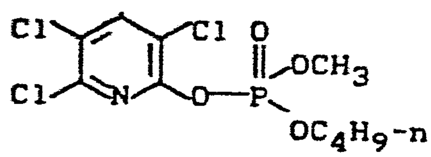 (4) | 0,036 |

Patentansprüche

1. Selektiv fungizide und Cutinase-hemmende Mittel, gekennzeichnet durch einen Gehalt an mindestens einem asymmetrischen 2-Pyridylphosphorsäureester der Formel I

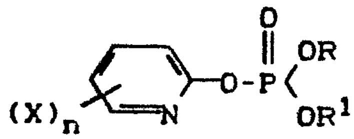

(I)

in welcher

X für Halogen steht,

R für $C_1$-$C_3$-Alkyl steht,

$R^1$ für Alkyl mit mindestens 3 Kohlenstoffatomen steht und

n für die Zahlen 0, 1, 2, 3 oder 4 steht, wobei R verschieden von $R^1$ ist.

2. Selektiv fungizide und Cutinase-hemmende Mittel gemäß Anspruch 1, wobei in der Formel (I)

X für Fluor, Chlor oder Brom steht,

R für Methyl, Ethyl, n-Propyl oder i-Propyl steht,

$R^1$ für Alkyl mit 3 bis 12 Kohlenstoffatomen steht und

n für die Zahlen 0, 1, 2, 3 oder 4 steht, wobei R verschieden von $R^1$ ist.

3. Selektiv fungizide und Cutinase-hemmende Mittel gemäß Anspruch 1, wobei in der Formel (I)

X für Fluor, Chlor oder Brom steht,

R für Methyl, Ethyl, n-Propyl oder i-Propyl steht,

$R^1$ für Alkyl mit 3 bis 10 Kohlenstoffatomen steht und

n für die Zahlen 1, 2, oder 3 steht, wobei R verschieden von $R^1$ ist.

4. Selektiv fungizide und Cutinase-hemmende Mittel gemäß Anspruch 1, wobei in der Formel (I)

X für Chlor steht,

R für Methyl oder Ethyl steht,

$R^1$ für n-Propyl, i-Propyl, n-Butyl, i-Butyl, sec.-Butyl, tert.-Butyl, n-Pentyl, 2-Pentyl, 3-Pentyl, 2-Methyl-1-butyl, 2-Methyl-2-butyl, 3-Methyl-2-butyl, 2,2-Dimethyl-1-butyl, n-Hexyl, n-Heptyl und n-Octyl steht und

n für die Zahlen 2 oder 3 steht.

5. Verfahren zur Bekämpfung von Pilzen und zur Hemmung von Cutinase, dadurch gekennzeichnet, daß man asymmetrische 2-Pyridylphosphorsäureester der Formel (I) auf Pilze und/oder ihren Lebensraum einwirken läßt.

6. Verwendung von asymmetrischen 2-Pyridylphosphorsäureestern der Formel(I) gemäß Ansprüchen 1 bis 4 zur Bekämpfung von Venturia- und Erysiphe-Erregern.

7. Verwendung von asymmetrischen 2-Pyridylphosphorsäureestern der Formel(I) gemäß Ansprüchen 1 bis 4 als Cutinase-Inhibitoren.

8. Verfahren zur Herstellung von selektiv fungiziden und Cutinase-hemmenden Mitteln, dadurch gekennzeichnet, daß man asymmetrische 2-Pyridylphosphorsäureester der Formel (I) mit Streckmitteln und/oder oberflächenaktiven Mitteln vermischt.

Europäisches Patentamt

0237866

# EUROPÄISCHER RECHERCHENBERICHT

Nummer der Anmeldung

EP 87 10 3027

| EINSCHLÄGIGE DOKUMENTE | | | |
|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (Int. Cl 4) |
| X | EP-A-0 132 676 (BAYER)<br>* Patentansprüche 1-10 *<br>----- | 1-4,8 | A 01 N 57/16<br>C 07 F 9/58 |
| | | | RECHERCHIERTE SACHGEBIETE (Int. Cl.4) |
| | | | A 01 N<br>C 07 F |

Der vorliegende Recherchenbericht wurde für alle Patentanspruche erstellt.

| Recherchenort | Abschlußdatum der Recherche | Prüfer |
|---|---|---|
| DEN HAAG | 16-06-1987 | NATUS |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82